**Europäisches Patentamt**

**European Patent Office**

**Office européen des brevets**

(19)

(11) Veröffentlichungsnummer : **0 520 936 A1**

# (12) EUROPÄISCHE PATENTANMELDUNG

(21) Anmeldenummer : **92710017.2**

(22) Anmeldetag : **17.06.92**

(51) Int. Cl.$^5$ : **B28B 11/18,** B24B 9/06, G05B 19/405

(30) Priorität : **24.06.91 DE 4120781**

(43) Veröffentlichungstag der Anmeldung : **30.12.92 Patentblatt 92/53**

(84) Benannte Vertragsstaaten : **DE FR IT**

(71) Anmelder : **Dorst Maschinen und Anlagenbau Otto Dorst und Dipl.-Ing Walter Schlegel GmbH & Co.**
**Mittenwalder Strasse 61 P.O. Box 109 + 129 W-8113 Kochel am See (DE)**

(72) Erfinder : **Negura, Christian**
**Am Lainbach 17**
**W-8113 Kochel am See (DE)**
Erfinder : **Krausert, Norbert**
**Mittenwalder Strasse 27**
**W-8113 Kochel am See (DE)**
Erfinder : **Ertl, Nikolaus**
**Ertlhöfe 6**
**W-8172 Lenggries (DE)**

(74) Vertreter : **Bockhorni, Josef, Dipl.-Ing. et al Herrmann-Trentepohl, Kirschner, Grosse, Bockhorni & Partner Forstenrieder Allee 59 W-8000 München 71 (DE)**

(54) **Verfahren zur Bearbeitung der Randkontur von vornehmlich unrunden keramischen Formteilen sowie Vorrichtung zur Durchführung des Verfahrens.**

(57) Verfahren zur Bearbeitung der Randkontur von vornehmlich unrunden keramischen Formteilen durch Pressen aus insbesondere pulver- oder granulatförmigem keramischem Material durch Putzwerkzeuge, bei dem die Putzwerkzeuge eine rotierende Arbeitsbewegung ausführen, die zu putzende Randkontur des Formteils in einem Rechner gespeichert und die Bewegungsbahn der Putzwerkzeuge entlang der Randkontur des Formteils sowie die tangentiale Ausrichtung der Putzwerkzeuge zur Randkontur abhängig von der gespeicherten Randkontur des Formteils gesteuert wird.

EP 0 520 936 A1

Die Erfindung betrifft ein Verfahren gemäß dem Oberbegriff des Patentanspruches 1 sowie eine Vorrichtung zur Durchführung dieses Verfahrens.

Bei der Herstellung von keramischen Formteilen entsteht während des Preßvorgangs in der Presse ein durch die Teilungsebene der Form bedingter umlaufender Grat am Formteil, zumal zum Zwecke der vollständigen Füllung der Form zur Herstellung einwandfreier Presslinge diese zumeist mit Materialüberschuß befüllt wird. Ähnliche Grate entstehen auch bei anderen Verfahren zur Herstellung keramischer Formteile, wie insbesondere beim Drehen und Gießen. Der Grat wird dann in einer nachfolgenden Bearbeitungsstation abgebrochen und die an der Randkontur des keramischen Formteils verbleibenden Gratreste müssen in weiteren Bearbeitungsstationen durch Schleifen, Schwammen und Polieren entfernt werden, um einen einwandfreien keramischen Formteil herzustellen. Die Bearbeitung der Randkontur ist verhältnismäßig problemlos bei Formteilen mit rundem Grundriß. Anders sieht dies jedoch bei unrunden keramischen Formteilen aus, insbesondere bei Formteilen, deren Form stark von der Kreisform abweicht. Eine Schwierigkeit besteht hierbei vor allem darin, das Werkzeug einwandfrei entsprechend der Randkontur des Formteils zu fahren. Hierzu arbeitet man im Stand der Technik mit Schablonen, die mit Rollen abgefahren werden, so daß infolge einer zwangsschlüssigen Kopplung zwischen Rolle und Putzwerkzeug letzteres entsprechend der Schablonenbahn um das zu bearbeitende Formteil herumgeführt wird. Da aber das Putzwerkzeug zumeist in einer geneigten Achse gestellt ist und um diese Achse rotiert sowie ferner federd gehalten ist, ergeben sich bei Bögen mit vergleichsweise geringem Krümmungsradius Schwierigkeiten dadurch, daß hierbei schwer die gewünschte Ausrichtung des Putzwerkzeugs beibehalten werden kann, so daß es zu Markierungen und Schleifspuren kommt. Um eine weitgehend tangentielle Ausrichtung der Putzwerkzeuge zum jeweils momentanen Bearbeitungspunkt zu gewährleisten, ist es bekannt, den Kopiervorgang an einer Schablone mit Hilfe von drei Rollen durchzuführen, welche die Schablonenkontur ablaufen. Zwei der Rollen sollen hierbei gewährleisten, daß die Tangente im Bearbeitungspunkt zum Artikel und die Tangente zur Projektion des Werkzeugs im Bearbeitungspunkt annähernd zusammenfallen. Dies erfordert allerdings, daß im Bereich von Kurven mit kleinerem Krümmungsradius der Schablonenverlauf von der Grundrißform bzw. der Randkontur des zu bearbeitenden Formteils abweicht, um weitgehend eine tangentiale Führung der Rollen an der Schablone zu gewährleisten. Die Herstellung solcher Schablonen ist in der Praxis außerordentlich zeit- und arbeitsaufwendig, zumal die Schablonen überwiegend von Hand gefertigt werden müssen.

Bei einer weiteren bekannten Randbearbeitungsmaschine werden gleichfalls Rollen verwendet, welche eine deckungsgleich mit dem zu bearbeitenden Formteil angeordnete Schablone umfahren, jedoch wird hier die Bewegung der Rolle nicht direkt über ein Hebelsystem an den Werkzeughalter weitergegeben, sondern mittels Drehgeber in ein elektrisches Signal umgewandelt. Dieses dient dann zur Ansteuerung der Motore, die das Zustellen und Schwenken der Werkzeuge bewirken.

Auch hier treffen die Ausführungen zur Fertigung der Schablone zu. Um ein brauchbares Bearbeitungsergebnis zu erzielen, muß ferner das Koordinatensystem des zu bearbeitenden Formteils und der Schablone genau ausgerichtet sein, was wiederum sehr zeitaufwendig ist. Da Schablone und Formteil mit konstanter Drehzahl drehen, verweilt das Werkzeug an den Bearbeitungspunkten, die näher an der Drehachse liegen, länger als bei denen, die weiter weg liegen. Das führt dazu, daß an den Punkten, die näher an der Drehachse liegen, zwangsläufig mehr Material abgetragen wird.

Aufgabe der Erfindung ist es, ein Verfahren sowie eine Vorrichtung zur Durchführung des Verfahrens zu schaffen, welches die Nachteile des Schablonenkopiervorganges vermeidet, ein leichtes Umstellen auf unterschiedliche Formteile ermöglicht und in einfacher Weise eine exakte Randbearbeitung gewährleistet. Insbesondere soll der bei einem Wechsel der Schablone anfallende Zeitaufwand, der als Totzeit in die Fertigung eingeht, weitgehend vermieden werden.

Diese Aufgabe wird erfindungsgemäß durch die im kennzeichnenden Teil des Anspruches 1 enthaltenen Merkmale gelöst, wobei zweckmäßige Weiterbildungen der Erfindung durch die in den Unteransprüchen enthaltenen Merkmale gekennzeichnet sind.

Nach Maßgabe der Erfindung entfällt die Verwendung einer Schablone, so daß auch die mit der Herstellung einer Schablone verbundenen Nachteile hinsichtlich des Zeit- und Arbeitsaufwandes wegfallen. Stattdessen wird die Randkontur des zu bearbeitenden Formteils über ein in der Steuerung integriertes CAD-Paket eingegeben, welches nur wichtigste Funktionen enthält und demnach äußerst einfach zu bedienen ist. Infolge der Speicherung der Randkontur im Rechner, sind die verschiedensten Randkonturen im Rechner jederzeit abrufbereit, so daß bei einem Wechsel der Produkte die Auswechsel- und Einrichtzeiten der Schablone entfallen. Rechnergesteuert wird hierbei die Bewegungsbahn der Putzwerkzeuge entlang der Randkontur des Formteils sowie die tangentiale Ausrichtung der Putzwerkzeuge zur Randkontur abhängig von der gespeicherten Randkontur des Formteils gefahren und eingehalten. Steuerungsintern werden die Konturdaten in ein NC-Programm umgewandelt. Ein weiterer Vorteil des Verfahrens besteht darin, daß Änderungen an einem erstellten Programm in kürzester Zeit durchgeführt werden können. Anstelle des Ausrichtens der Schablone zur Formteilaufnahme am Beginn der Fertigung reduziert sich das Ausrichten mit dem erfindungsgemäßen Verfahren auf ein Schieben und Drehen der Kontur am CAD-Bildschirm. Bei einer Änderung der Kontur ist hierbei ein neues Ausrichten nicht mehr notwendig.

Nach einem weiteren bevorzugten Merkmal der Erfindung umfahren die Putzwerkzeuge die Randkontur des zu bearbeitenden Formteils mit konstanter Bahngeschwindigkeit. Hierbei steht das Formteil fest und es wird simultan die Tangentenzustellung durchgeführt. Verfahrenstechnisch erreicht man dies dadurch, daß durch zwei senkrecht zueinander verfahrbare Schlitten das Umfahren des Putzwerkzeuges um die Randkontur gewährleistet wird, wobei die Summe der Geschwindigkeit in x-Richtung und in y-Richtung in jedem Bahnpunkt konstant ist. Dadurch wird auf dem gesamten Umfang, unabhängig von der Entfernung des entsprechenden Bahnpunkts zum Mittelpunkt, das gleiche Bearbeitungsergebnis erzielt, so daß die Formteile gleichwertig qualitativ bearbeitet werden. Hierbei ist es wesentlich, daß in jedem Bahnpunkt über eine weitere Zwangsführungseinrichtung sichergestellt wird, daß die Putzwerkzeuge in Überlagerung zur Bahnbewegung eine Ausrichtung an jedem Punkt erfahren, um eine tangentiale Zuordnung des Putzwerkzeugs an die zu bearbeitende Randkontur zu gewährleisten.

Die erfindungsgemäße Putzmaschine zeichnet sich durch eine sehr steife Portalbauweise aus, wobei über ein aufgehängtes Doppelportal aus zwei senkrecht zueinander verfahrbaren Schlitten das Umfahren der Randkontur bei konstanter Bahngeschwindigkeit gewährleistet wird. Ein am Doppelportal aufgehängter Trägerbalken weist entsprechend der Anzahl der Formteilaufnahmen, also der Arbeitsstationen, Werkzeughalter auf, die die Putzwerkzeuge aufnehmen. Diese Werkzeughalter werden über einen eigenen Antrieb an jedem Bahnpunkt der Umlaufbahn so gestellt, daß eine tangentiale Ausrichtung des Werkzeugs gewährleistet ist. Der Trägerbalken fährt hierbei sämtliche Schlittenbewegungen des Doppelportals mit. Der Werkzeughalter selbst ist in fünf Freiheitsgraden einstellbar, so daß eine exakte Justierung der Putzwerkzeuge unter den verschiedensten Winkeln möglich ist. Ferner wird infolge dieser Bauweise erreicht, daß an jeder Station der Angriffspunkt des Werkzeuges relativ zum Trägerbalken der gleiche ist. Die eingesetzten Werkzeuge können sich hierbei in Form, Größe und Beschaffenheit voneinander unterscheiden. Die Werkzeughaltung ist hierbei so ausgebildet, daß der Bearbeitungspunkt am Werkzeug beibehalten werden kann, unabhängig vom gewählten Eingriffswinkel des gewählten Werkzeugs.

Vorteilhaft sind die Werkzeuge über eine Magnetbefestigung befestigt, wodurch der Werkzeugwechsel mit einem einzigen Handgriff und ohne Hilfswerkzeuge möglich ist. Aufgrund einer gekapselten Staubabsaugung werden die beim Bearbeitungsvorgang entstehenden Abfallteilchen gesammelt, insbesondere wird die kinetische Energie der umherfliegenden Preßgratreste durch Bürsten vernichtet, die längs der Bearbeitungsöffnung der Absaugkammer angeordnet sind. Schließlich ist die Formteilaufnahme durch eine Universalaufnahme gebildet, wodurch das Erstellen einer artikelabhängigen Aufnahme entfällt.

Nachfolgend wird ein bevorzugtes Ausführungsbeispiel der Erfindung anhand der Zeichnung beschrieben. Darin zeigen:

Figur 1 eine Seitenansicht einer Ausführungsform einer Putzmaschine zur Bearbeitung der Randkontur von keramischen Formteilen,

Figur 2 eine Draufsicht auf die Putzmaschine nach Figur 1 in teilweise gebrochener Darstellung,

Figur 3 eine Seitenansicht der Putzmaschine, von der schmalen Seite her gesehen, wobei sämtliche Figuren rein schematisch dargestellt sind sowie

Figur 4 eine Ansicht einer gekapselten Staubabsaugung.

Die Putzmaschine umfaßt ein mit 1 bezeichnetes Maschinenbett, an dessen Ecken vier Säulen 2 angeordnet sind, die nach oben vorstehen und am oberen Ende durch Längsholme 3 und Querholme 4 zu einem portalartigen Gestellrahmen starr miteinander verbunden sind. Auf dem Maschinenbett 1 sind in einer Reihe hintereinander und mit gleichmäßigem Abstand zueinander Aufnahmen 5 für die zu bearbeitenden Formteile angeordnet, die selbst zeichnerisch nicht dargestellt sind. In Auffangwannen 6 werden die bei der Randbearbeitung entstehenden Abfallteilchen gesammelt und abgesaugt. Die Formteilaufnahmen 5 sind mit Ejektoren versehen, so daß im Bereich der Aufnahme 5 ein Vakuum zur festen Halterung der zu bearbeitenden Formteile gebildet wird. Die Formteilaufnahmen 5 sind mit Univeralaufnahmen ausgestattet, so daß unterschiedliche Formteile ohne artikelabhängiges Zubehör aufgespannt werden können.

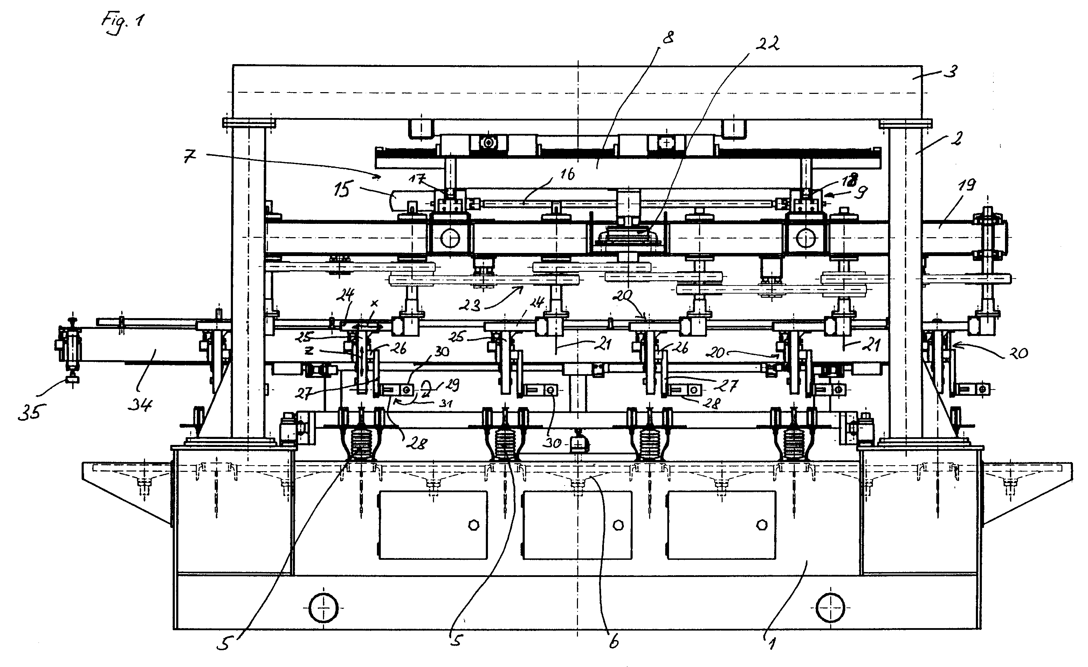

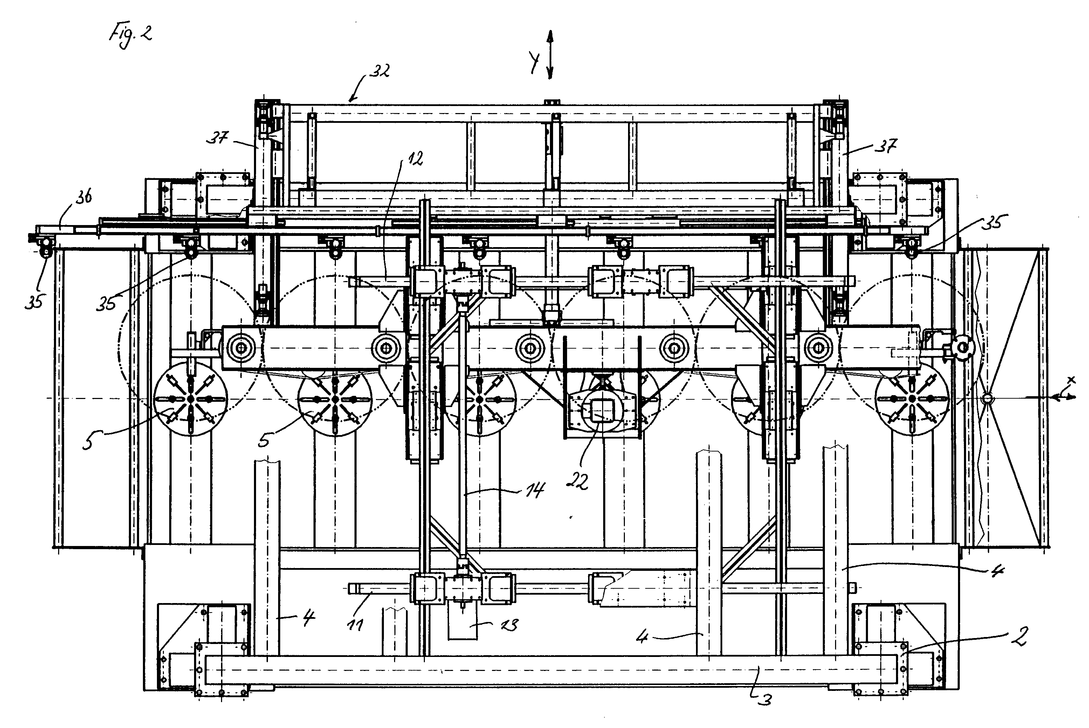

An dem durch die Längsholme 3 und die Querholme 4 gebildeten oberen Rahmen des Maschinengestells ist ein allgemein mit 7 bezeichnetes Doppelportal aufgehängt, welches zwei Schlitten 8 und 9 aufweist, die senkrecht zueinander in einer zur Aufspannebene parallelen Ebene, hier eine senkrechte Ebene zu der Zeichnungsebene von der Figur 1, bewegt werden können. Der obere Schlitten 8 des Doppelportals 7, der in Längsrichtung des Maschinenbetts bewegbar ist, wird über zwei parallele Zahnstangen 11 und 12 (Figur 2) angetrieben. Der Antrieb erfolgt über einen Wechselstrommotor 13, wobei die Antriebskraft über einen Zahnriemen auf die Zahnstangen 11 und 12 übertragen wird. Infolge der Kopplung beider Zahnriemenantriebe über eine Welle 14 wird die Antriebskraft für den Schlitten 8 synchron auf beide Zahnstangen 11 und 12 übertragen. Der Schlitten 9 wird einer Richtung senkrecht zur Bewegungsrichtung des Schlittens 8, die in Figur 2 mit Pfeil x gekennzeichnet ist, bewegt, also in Querrichtung (y-Richtung). Der Schlitten 9 wird analog über einen Wechselstrommotor 15, Zahnriemen, Welle 16 und Zahnstangen 17 und 18 in y-Richtung angetrieben, wobei die Zahnstangen 17 und 18 gleichfalls parallel in Bewegungsrichtung des Schlittens 9 sich erstreckend angeordnet sind.

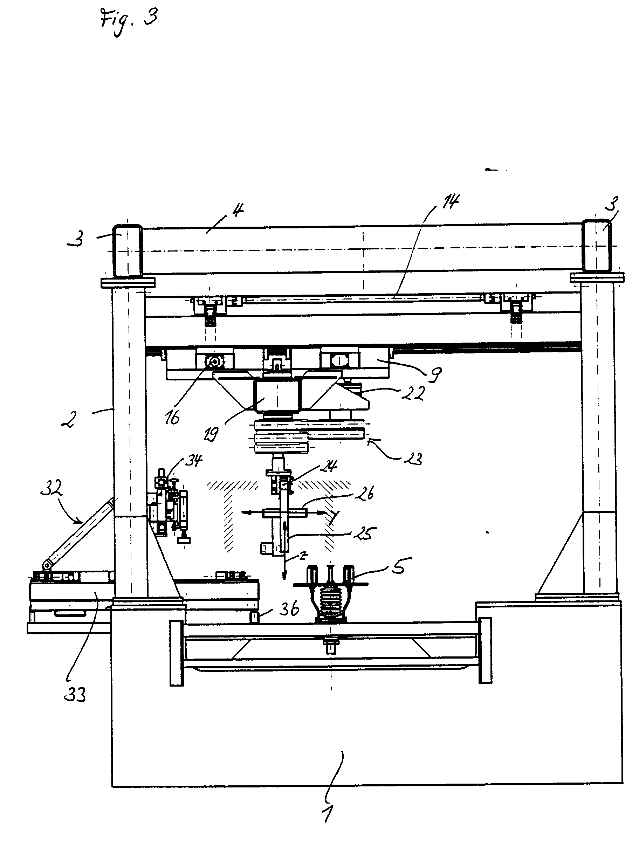

Am unteren Schlitten 9 ist ein sich in Längsrichtung erstreckender Tragbalken 19 angeordnet, der beide Schlittenbewegungen 8 und 9 mitfährt, d.h. die Kombination beider Schlittenbewegungen mitfährt. An diesem Tragbalken 19 sind die Putzwerkzeuge angeordnet, und zwar an im folgenden noch näher beschriebenen Werkzeughaltern 20. Im dargestellten Ausführungsbeispiel sind 6 Werkzeughalter 20 dargestellt entsprechend der Anzahl der Formteilaufnahmen 5, die gleichfalls sechs beträgt. Die Werkzeughalter 20 sind bezüglich des Tragbalkens 19 drehbar gelagert, wobei die Drehachse des Werkzeughalters 20 in Figur 1 mit 21 bezeichnet ist. Der Antrieb der Werkzeughalter 20 erfolgt über einen vorzugsweise am Tragbalken 19 angeflanschten Motor 22 und ein aus Figur 1 ersichtliches Transmissionsgetriebe 23, so daß die Werkzeughalter 20 synchron miteinander angetrieben werden. Die Werkzeughalter 20 umfassen einen mit 24 bezeichneten Galgen, der sich parallel zur Aufspannebene der Formteile und damit in Figur 1 horizontal erstreckt. Vertikal zum Galgen 24 und damit parallel zur Drehachse 21 erstreckt sich eine Tragleiste 25 des Werkzeughalters, wobei an der Tragleiste 25 zum Galgen 24 und zur Tragleiste 25 senkrecht eine Halteleiste 26 angebracht ist, wie deutlich aus Figur 3 hervorgeht. Durch die Leisten 24, 25, 26 ergibt sich eine Verstellbarkeit längs der drei Koordinatenachsen x, y und z, wie schematisch in den Figuren 1 und 3 dargestellt ist. Die Verstellung des Galgens 24 in x-Richtung erfolgt hierbei radial zur Drehachse 21. An der Halteleiste 26 ist eine weitere Leiste 27 befestigt, an deren unterem Ende ein Arm 28 befestigt ist, der um die horizontal verlaufende Achse 29 drehbar eingestellt werden kann. Dies ist in Figur 1 schematisch durch Pfeil angedeutet. Am freien Ende des Arms 28 ist schließlich das Putzwerkzeug aufgenommen, welches zeichnerisch nicht dargestellt ist. Das Putzwerkzeug ist hierbei bezüglich des Arms 28 drehbar einstellbar, wie durch einen Zapfen 30 in Figur 1 gekennzeichnet ist. Auch hier ist die Drehrichtung durch Pfeil 31 gekennzeichnet. Dadurch ergeben sich bezüglich der Einstellung des am Arm 28 aufgenommenen Putzwerkzeugs ingesamt 5 Freiheitsgrade, in denen die Stellung des Putzwerkzeugs über den Werkzeughalter 20 einstellbar ist, nämlich Einstellbarkeit längs der drei Koordinatenrichtungen x, y und z über die Teile 24, 25 und 26 sowie Drehbewegung um die Achse 29 sowie Drehbewegung um die zur Achse 29 senkrecht sich erstreckende Achse, wie durch Pfeil 31 gekennzeichnet. Als Putzwerkzeuge werden die üblichen Werkzeuge verwendet, wie Schleifscheiben oder Schleifpapierscheiben sowie Schwammwalzen und dgl. Beispielsweise können im dargestellten Ausführungsbeispiel von links nach rechts an den Werkzeughaltern 20 ein Gratabbrecher, dann zwei Schleifwerkzeuge und an den rechten drei Werkzeughaltern 20 drei Schwämme aufgenommen sein.

Zum Umsetzen der Formteile nach Beendigung des Arbeitsvorganges an der Formteilaufnahme dient ein Linearübersetzer 32, der einen Schlitten 33 aufweist, der in Längsrichtung und in Querrichtung des Maschinenbetts bzw. der Maschine, also in x- und y-Richtung bewegbar ist. Auf dem Schlitten 33 ist ein Stützbalken 34 fest angeordnet, der sich im wesentlichen über die Länge der Putzmaschine erstreckt und der in den gleichen Abständen wie die Formteilaufnahmen zueinander pneumatisch höhenverstellbare Saugköpfe 35 trägt. Hierbei sind bei sechs Formteilaufnahmen und sechs Werkzeughaltern sieben Saugköpfe 35 vorgesehen, da bei jedem Arbeitstakt einer der Saugköpfe, hier in Figur 1 der linke Saugkopf, das Formteil aus der Presse entnimmt und im nächsten Arbeitstakt der in Figur 2 rechte Saugkopf 35 das fertig bearbeitete Formteil aus der rechten Formteilaufnahme 5 aushebt und aus der Putzmaschine herausträgt. Die Führung des Schlittens 32 in x-Richtung ist aus Figur 2 bei 36 erkennbar. Die Führungsschienen für die y-Richtung sind in Figur 2 mit 37 bezeichnet.

Die Arbeitsweise der Putzmaschine, die im dargestellten Ausführungsbeispiel sechs Bearbeitungsstationen aufweist, ist wie folgt. Aus der nicht dargestellten Presse wird über den Stützbalken 34 durch den links dargestellten Saugkopf 35 ein Formteil aus der Presse gehoben und durch entsprechende Schlittenbewegung und pneumatische Höhenverstellung des Saugkopfs 35 auf die in Figur 1 links dargestellte Formteilaufnahme gesetzt. Gleichzeitig, d.h. synchron werden über die weiteren Saugköpfe 35 die an den Formteilaufnahmen bereits bearbeiteten Formteile in die nächste Arbeitsstation, also, die nächstliegende rechte Formteilaufnahme umgesetzt bzw. aus der Putzmaschine herausgehoben. In der linken Arbeitsstation erfolgt dann das Abbrechen des Grats des Formteiles, wobei der Werkzeughalter 24 mit dem daran aufgenommenen Gratbrechwerkzeug bzw. die übrigen Werkzeughalter mit den daran angeordneten Putzwerkzeugen längs der Randkontur des in der Formteilaufnahme aufgespannten Formteiles bewegt werden. Diese Bewegung längs der zu bearbeitenden Randkontur erfolgt in konstanter Bahngeschwindigkeit durch die Zustellbewegung der beiden Schlitten 8 und 9 in x- und y-Richtung. Gleichzeitig wird in jedem Punkt der Bahn, die das Putzwerkzeug beim Umlauf längs der Randkontur durchläuft, über den Motor 22 und das Transmissionsgetriebe 23 synchron jeder Werkzeughalter 24 gedreht bzw. geschwenkt, so daß das daran aufgenommene Putzwerkzeug in die gewünschte Stellung auf der Bahn ausgerichtet wird, und zwar in tangentialer Stellung zur zu bearbeitenden Randkontur. D.h., über das Doppelportal und den daran fest aufgehängten Tragbalken erfahren die Werkzeughalter und die darin aufgenommenen Werkzeuge die Umlaufbahn längs der Randkontur des Formteiles, wohingegen die Drehbewegung der Werkzeughalter 20 um die Drehachsen 21 eine stete Ausrichtung der aufgenommenen Werkzeuge in tangentialer Ausrichtung zum entsprechenden Punkt der Umlaufbahn erfolgt. Dies ist ein sehr wesentlicher Gesichtspunkt der beschriebenen Putzmaschine. Die Steuerung der Bewegung der beiden Schlitten 8 und 9 erfolgt hierbei über einen Rechner anhand einer im Rechner gespeicherten Randkontur des entsprechenden Formteiles, wobei auch die Ausrichtung der Putzwerkzeuge tangential zum jeweiligen Bahnpunkt der Umlaufbahn des Putzwerkzeugs um das Formteil rechnergesteuert über die gespeicherte Randkontur erfolgt. Dadurch entfällt der aufwendige Einsatz von Schablonen.

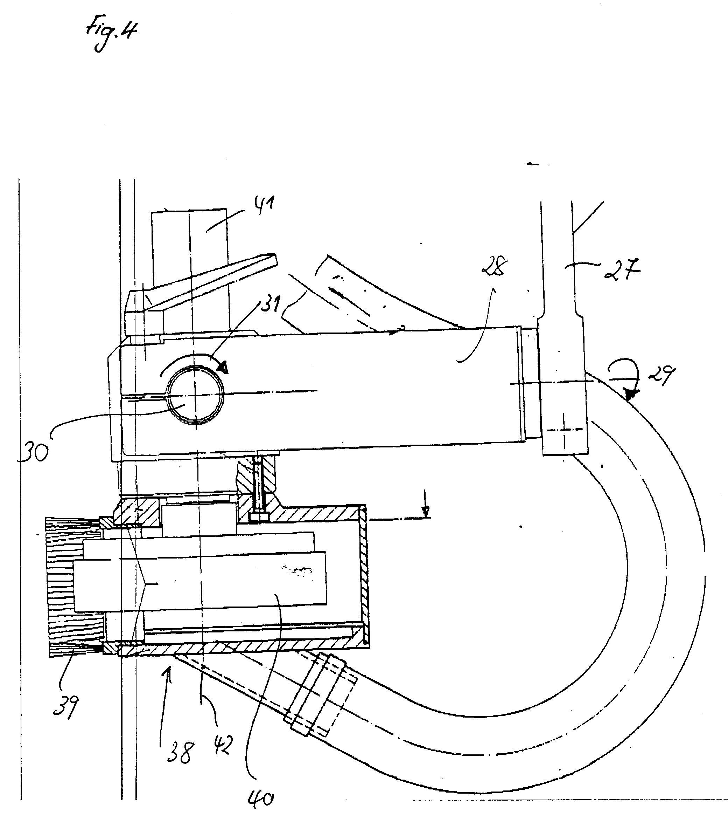

Jedes am Arm 28 aufgenommene Putzwerkzeug 40 ist zweckmäßigerweise in einer Absaugkammer 38 (siehe Fig. 4) angeordnet, die in Richtung auf die zu bearbeitende Formteilrandkante eine Öffnung aufweist. Die Öffnung ist mit Bürstenleisten 39 umgeben, so daß bei der Bearbeitung anfallende Teilchen nicht nach außen gelangen, vielmehr über die Absaugkammer aus dem Bearbeitungsbereich abgesaugt werden. Mit 41 ist schließlich der Antrieb bezeichnet, durch den die rotierende Arbeitsbewegung des Putzwerkzeugs um die Werkzeugachse 42 erzeugt wird. Hierzu eignet sich zweckmäßigerweise ein Druckluftmotor. Dadurch ist eine gekapselte Staubabsaugung gewährleistet.

**Patentansprüche**

1. Verfahren zur Bearbeitung der Randkontur von vornehmlich unrunden keramischen Formteilen durch insbesondere Pressen aus insbesondere pulver- oder granulatförmigem keramischem Material durch Putzwerkzeuge, bei dem die Putzwerkzeuge eine rotierende Arbeitsbewegung ausführen,
**dadurch gekennzeichnet,**
daß die zu putzende Randkontur des Formteils in einem Rechner gespeichert und die Bewegungsbahn der Putzwerkzeuge entlang der Randkontur des Formteils sowie die tangentiale Ausrichtung der Putzwerkzeuge zur Randkontur abhängig von der gespeicherten Randkontur des Formteils gesteuert wird.

2. Verfahren nach Anspruch 1, **dadurch gekennzeichnet,** daß die Putzwerkzeuge mit konstanter Bahngeschwindigkeit die Randkontur umfahren.

3. Verfahren nach Anspruch 1 oder 2, **dadurch gekennzeichnet,** daß die tangentiale Ausrichtung der Putzwerkzeuge stetig, also in jedem inkrementellen Punkt der Umlaufbahn der Putzwerkzeuge erfolgt.

4. Verfahren nach einem der Ansprüche 1 bis 3, **dadurch gekennzeichnet,** daß das Einfahren und Ausfahren der Putzwerkzeuge in die Bearbeitungsstellung tangential zur Randkontur mit entsprechend des Anfahrpunktes der Putzwerkzeuge an der Randkontur tangential ausgerichteten Putzwerkzeugen erfolgt.

5. Verfahren nach einem der Ansprüche 1 bis 4, **dadurch gekennzeichnet,** daß das Nachfahren der Randkontur durch zwei in einer Ebene senkrecht zueinander verfahrbare Schlitten erfolgt und die tangentiale Ausrichtung durch eine Drehbewegung eines Werkzeughalters oder -gestells (20) erfolgt, welches beide Schlittenbewegungen mitfährt.

6. Vorrichtung zur Durchführung des Verfahrens nach einem der Ansprüche 1 bis 5, mit rotierenden Putzwerkzeugen, **dadurch gekennzeichnet,**
daß die Putzmaschine zwei in einer Ebene senkrecht zueinander verfahrbare Schlitten (8, 9) zum Umfahren der Randkontur aufweist und die Putzwerkzeuge je in einem Werkzeuggestell (20) aufgenommen sind, welches um eine zu der durch die Bewegungsbahn der Schlitten aufgespannten Ebene senkrechten Achse (21) drehbar ist und beide Schlittenbewegungen mitfährt.

7. Vorrichtung nach Anspruch 6, **dadurch gekennzeichnet,** daß die beiden Schlitten (8, 9) ein Doppelportal bilden, welches fest am Maschinengestell (1 - 4) aufgehängt ist.

8. Vorrichtung nach Anspruch 6 oder 7, **dadurch gekennzeichnet,** daß das Gestell der Putzmaschine ein Maschinenbett (1) zur Aufnahme der vorzugsweise als Universalaufnahme ausgebildeten Formteilaufnahmen (5) und vier vertikale Säulen (2) aufweist, die am oberen Ende durch Längs- und Querholme (3, 4) starr verbunden sind, an denen das Doppelportal aus den beiden Schlitten (8, 9) aufgehängt ist.

9. Vorrichtung nach einem der Ansprüche 6 bis 8, **dadurch gekennzeichnet,** daß der Schlittenantrieb je Schlitten über vorzugsweise zwei parallel und mit Abstand angeordnete Zahnstangen (11, 12; 17, 18) erfolgt.

10. Vorrichtung nach einem der Ansprüche 6 bis 9, **dadurch gekennzeichnet**, daß die Putzmaschine eine der Anzahl der Putzwerkzeuge entsprechende Anzahl von Formteilaufnahmen (5) aufweist, die in einer Linie hintereinander auf dem Maschinenbett (1) angeordnet sind, und daß die die Putzwerkzeuge aufnehmenden Werkzeuggestelle (20) auf einem Trägerbalken (19) aufgenommen sind, der oberhalb des Maschinenbetts (1) am Doppelportal aufgehängt ist.

11. Vorrichtung nach einem der Ansprüche 6 bis 10, **dadurch gekennzeichnet**, daß der Drehantrieb der Werkzeuggestelle zentral und synchron von einem Antrieb (22) aus über Transmissionsriemen (23) erfolgt.

12. Vorrichtung nach einem der Ansprüche 6 bis 11, **dadurch gekennzeichnet**, daß das Werkzeuggestell in fünf Freiheitsgraten einstellbar ist und hierzu einen in drei Koordinatenrichtungen x, y, z ver- bzw. einstellbaren Rahmen aufweist, wobei eine Koordinatenrichtung (24) sich in einer Radialen zur Drehachse (21) des Werkzeuggestells (20) erstreckt, daß der Rahmen einen Arm (28) aufweist, der um eine zur Drehachse (21) senkrechte Achse (29) drehbar verstellbar ist, an dem wiederum drehend verstellbar das Putzwerkzeug angeordnet ist, wobei die Drehbewegung um eine zur Drehachse (29) des Arms senkrechte Achse (31) erfolgt, und daß jedes Putzwerkzeug zur Ausführung der Arbeitsbewegung über einen separaten Antrieb (41) drehend angetrieben ist.

13. Vorrichtung nach einem der vorhergehenden Vorrichtungsansprüche, **dadurch gekennzeichnet**, daß die Putzwerkzeuge am Werkzeughalter (20) durch eine Magnetbefestigungseinrichtung aufgenommen sind, die vorzugsweise aus einem gestellseitigen Dauermagnetzapfen gebildet ist, auf dem das Werkzeug passgerecht aufsteckbar ist.

14. Vorrichtung nach einem der Ansprüche 6 bis 13, **dadurch gekennzeichnet**, daß das Putzwerkzeug von einer zur Bearbeitungsstelle hin offenen Absaugkammer (38) umgeben ist, wobei die Kammeröffnung für das Werkzeug (40) durch Bürstenleisten (39) begrenzt ist.

15. Vorrichtung nach einem der Ansprüche 6 bis 14, **dadurch gekennzeichnet**, daß die Formteile nach jedem Arbeitszyklus durch einen Linearübersetzer (32) in die nächste Arbeitsstation umsetzbar sind, der einen quer und längs des Maschinenbetts (1) verfahrbaren Schlitten (33) und einen auf dem Schlitten (33) angeordneten Stützbalken (34) aufweist, an dem Saugköpfe, vorzugsweise pneumatisch höhenverstellbar aufgenommen sind.

16. Vorrichtung nach einem der Ansprüche 6 bis 15, **dadurch gekennzeichnet**, daß die Formteilaufnahme (5) Ejektoren zur Erzeugung eines Vakuums zwecks fester Aufnahme der Formteile aufweist.

Fig. 1

Fig. 2

Fig. 3

Fig.4

**Europäisches Patentamt**

# EUROPÄISCHER RECHERCHENBERICHT

Nummer der Anmeldung

EP 92 71 0017

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | ZWF ZEITSCHRIFT FUR WIRTSCHAFTLICHE FERTIGUNG Bd. 84, Nr. 3, 389, MUNCHEN DE SPUR ET AL 'Erwiterungsmöglichkeiten einer CNC-Steuerung für die 5-Achsen-Fräsbearbeitung' * das ganze Dokument * --- | 1-4 | B28B11/18 B24B9/06 G05B19/405 |
| A | DE-C-3 404 128 (MASCHINEN- UND STAHLBAU JULIUS LIPPERT GMBH & CO) * Spalte 4, Zeile 59 - Zeile 66 * --- | 1-2,6 | |
| A | DE-C-3 429 280 (GEBRÜDER NETZSCH, MASCHINENFABRIK GMBH & CO) * Abbildung 2 * --- | 6 | |
| A | PATENT ABSTRACTS OF JAPAN vol. 7, no. 16 (M-187)(1161) 22. Januar 1983 & JP-A-57 173 447 ( NAKAMURATOME SEMITSU KOGYO K.K. ) * Zusammenfassung; Abbildung * ----- | 1,6 | **RECHERCHIERTE SACHGEBIETE (Int. Cl.5 )** B28B B24B G05B |

Der vorliegende Recherchenbericht wurde für alle Patentansprüche erstellt

| Recherchenort | Abschlußdatum der Recherche | Prüfer |
|---|---|---|
| DEN HAAG | 29 SEPTEMBER 1992 | PIPPING L.E.L. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

 

& : Mitglied der gleichen Patentfamilie, übereinstimmendes Dokument

EPO FORM 1503 03.82 (P0403)